(19) **Europäisches Patentamt / European Patent Office / Office européen des brevets**

(11) **EP 3 780 183 A1**

(12) # EUROPEAN PATENT APPLICATION
published in accordance with Art. 153(4) EPC

(43) Date of publication:
**17.02.2021 Bulletin 2021/07**

(21) Application number: **18912467.0**

(22) Date of filing: **28.03.2018**

(51) Int Cl.:
**H01M 4/587** (2010.01)   **H01M 4/36** (2006.01)

(86) International application number:
**PCT/JP2018/012985**

(87) International publication number:
**WO 2019/186831 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Chemical Company, Ltd.**
**Chiyoda-ku,**
**Tokyo 100-6606 (JP)**

(72) Inventors:
- **HIRAGA, Manami**
  **Tokyo 100-6606 (JP)**
- **MASAYOSHI, Takeshi**
  **Tokyo 100-6606 (JP)**
- **SAKAMOTO, Takashi**
  **Tokyo 100-6606 (JP)**
- **SATOU, Katsuya**
  **Tokyo 100-6606 (JP)**

(74) Representative: **Berggren Oy, Helsinki & Oulu**
**Isokatu 32**
**90100 Oulu (FI)**

(54) **METHOD FOR MANUFACTURING NEGATIVE ELECTRODE MATERIAL FOR LITHIUM-ION SECONDARY BATTERY, AND METHOD FOR MANUFACTURING LITHIUM-ION SECONDARY BATTERY**

(57)   A method of manufacturing a negative electrode for a lithium-ion secondary battery, the method comprising: (a) a process of obtaining a mixture that comprises a graphitizable binder and at least one selected from the group consisting of a graphitizable aggregate and graphite; (b) a process of obtaining a molded product by molding the mixture, in which the graphitizable binder is in a softened state; (c) a process of obtaining a graphitized product by graphitizing the molded product; and (d) a process of obtaining a pulverized product by pulverizing the graphitized product.

EP 3 780 183 A1

**Description**

[Technical Field]

The invention relates to a method for manufacturing a negative electrode material for a lithium-ion secondary battery, and a method for manufacturing a lithium-ion secondary battery.

[Background Art]

Lithium-ion secondary batteries have a high level of energy density as compared with other secondary batteries such as nickel-cadmium batteries, nickel-hydrogen batteries and lead batteries, and are widely used as an electric source for mobile electric devices, such as laptop computers and mobile phones. Further, lithium-ion secondary batteries are expected to be applied to electric vehicles and energy storage systems.

As a material for a negative electrode of a lithium-ion secondary battery, graphite is widely used. As a method of manufacturing a negative electrode material using graphite, Patent Document 1, for example, describes a method including: pulverizing a mixture of a carbon material, a binder and the like; graphitizing a product obtained by molding the pulverized mixture; and further pulverizing the graphitized product.

[Prior Art Document]

[Patent Document]

Patent Document 1: International Publication No. 2015/147012

[Summary of the Invention]

[Problems to be Solved by the Invention]

The negative electrode produced by the method described in Patent Document 1 exhibits favorable battery properties such as charge/discharge capacity, as compared with using unprocessed graphite flakes as the negative electrode. However, simplification of the process is desired from the viewpoint of improving productivity.

In view of the foregoing, the invention aims to provide a method of manufacturing a negative electrode material for a lithium-ion secondary battery with favorable productivity; and a method for manufacturing a lithium-ion secondary battery with favorable productivity.

[Means for Implementing the Invention]

The means for implementing the invention includes the following embodiments.

<1> A method of manufacturing a negative electrode for a lithium-ion secondary battery, the method comprising:

(a) a process of obtaining a mixture that comprises a graphitizable binder and at least one selected from the group consisting of a graphitizable aggregate and graphite;
(b) a process of obtaining a molded product by molding the mixture, in which the graphitizable binder is in a softened state;
(c) a process of obtaining a graphitized product by graphitizing the molded product; and
(d) a process of obtaining a pulverized product by pulverizing the graphitized product.

<2> The method of manufacturing a negative electrode for a lithium-ion secondary battery according to <1>, wherein the process of obtaining a molded product is performed in a state in which the mixture has a temperature of 80°C or more.

<3> The method of manufacturing a negative electrode for a lithium-ion secondary battery according to <1> or <2>, wherein the process of obtaining a molded product is performed by extrusion molding.

<4> The method of manufacturing a negative electrode for a lithium-ion secondary battery according to any one of <1> to <3>, wherein the mixture further comprises a fluidity-imparting agent.

<5> The method of manufacturing a negative electrode for a lithium-ion secondary battery according to <4>, wherein the fluidity-imparting agent comprises a fatty acid.

<6> The method of manufacturing a negative electrode for a lithium-ion secondary battery according to any one of <1> to <5>, wherein the pulverized product comprises a particle in which plural flat graphite particles are aggregated or bonded such that principal surfaces of the graphite particles are not parallel to each other.

<7> A method of manufacturing a lithium-ion secondary battery, the method comprising a process of manufacturing a negative electrode using a negative electrode material that is manufactured by the method of manufacturing a negative electrode for a lithium-ion secondary battery according to any one of <1> to <6>.

<8> A method of manufacturing a lithium-ion secondary battery, the method comprising: a process of manufacturing a negative electrode material for a lithium-ion secondary battery by the method of manufacturing a negative electrode for a lithium-ion secondary battery according to any one of <1> to <6>; and a process of manufacturing a negative electrode using the negative electrode material for a lithium-ion secondary battery.

[Effect of the Invention]

According to the invention, a method of manufacturing a negative electrode material for a lithium-ion secondary battery with favorable productivity; and a method for manufacturing a lithium-ion secondary battery with favorable productivity are provided.

[Embodiments for Implementing the Invention]

Embodiments for carrying out the present invention will now be described in detail. However, the invention is in no way limited to the following embodiments. In the following embodiments, constituent elements (including element steps and the like) of the embodiments are not essential, unless otherwise specified. Likewise, numerical values and ranges thereof are not intended to restrict the invention.

In the present disclosure, the definition of the term "step" includes not only an independent step which is distinguishable from another step, but also a step which is not clearly distinguishable from another step, as long as the purpose of the step is achieved.

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, particles corresponding to each component may include plural kinds of particles. In a case in which plural kinds of particles corresponding to each component are present in a composition, the particle size of each component refers to the value of the particle size of a mixture of the plural kinds of particles present in the composition, unless otherwise specified.

In the present disclosure, the layer refers not only a configuration in which the layer is formed over the entire region but also a configuration in which the layer is formed on part of the region, when the region is observed.

<Method of manufacturing negative electrode for lithium-ion secondary battery>

The method of manufacturing a negative electrode for lithium-ion secondary battery (hereinafter, also simply referred to as a negative electrode) according to the disclosure includes:

(a) a process of obtaining a mixture that includes a graphitizable binder and at least one selected from the group consisting of a graphitizable aggregate and graphite;
(b) a process of obtaining a molded product by molding the mixture, in which the graphitizable binder is in a softened state;
(c) a process of obtaining a graphitized product by graphitizing the molded product; and
(d) a process of obtaining a pulverized product by pulverizing the graphitized product.

In the method, a molded product is obtained by molding, without pulverizing, a mixture that includes a graphitizable binder and at least one selected from the group consisting of a graphitizable aggregate and graphite. Therefore, the method exhibits favorable productivity, by not including a process of pulverization prior to the graphitization.

3

Each of the processes in the method may be performed continuously or not continuously. Further, each of the processes may be performed at the same place or at different places.

In process (a), a mixture that includes a graphitizable binder and at least one selected from the group consisting of a graphitizable aggregate and graphite is obtained. The method of obtaining the mixture is not particularly limited, and may be performed by using a kneader or the like. The mixing is preferably performed at a temperature at which the graphitizable binder becomes softened. Specifically, the mixing may be performed at a temperature of from 50°C to 300°C when the graphitizable binder is pitch, tar or the like; or at a temperature of from 20°C to 100°C when the graphitizable binder is a thermosetting resin.

The graphitizable aggregate is not particularly limited as long as it is graphitized by a graphitization treatment. Examples of the graphitizable aggregate include cokes such as fluid coke, needle coke and mosaic coke. Examples of the graphite include natural graphite and artificial graphite. The graphitizable aggregate or the graphite is preferably in the form of particles.

The graphitizable binder is not particularly limited as long as it is graphitized by a graphitization treatment. Examples of the graphitizable binder include pitch or tar of coal-type, petrol-type or artificial, thermoplastic resins and thermosetting resins.

The ratio of the materials in the mixture is not particularly limited. For example, the amount of the graphitizable binder with respect to 100 parts by mass of the graphitizable aggregate or the graphite may be from 15 parts by mass to 150 parts by mass, from 30 parts by mass to 130 parts by mass, or from 50 parts by mass to 110 parts by mass. When the amount of the binder is 15 parts by mass or more, the mixture has a sufficient level of fluidity and moldability thereof tends to be favorable. When the amount of the binder is 150 parts by mass or less, the mixture includes a sufficient amount of fixed carbon, and the yield tends to be favorable.

The mixture may include a single kind or plural kinds of graphitizable aggregate, graphite or graphitizable binder, respectively. The mixture may include a component other than the graphitizable aggregate, graphite or graphitizable binder, such as a fluidity-imparting agent, a graphitization catalyst or the like.

For ease of molding the mixture in process (b), the mixture preferably includes a fluidity-imparting agent, especially when the molding of the mixture is performed by extrusion molding that is performed while fluidizing the mixture. In addition, inclusion of a fluidity-imparting agent contributes to reduction in the amount of the graphitizable binder, and to improved battery properties such as initial charge/discharge efficiency.

The fluidity-imparting agent is not particularly limited, and the examples thereof include hydrocarbons such as liquid paraffin, paraffin wax and polyethylene wax; fatty acids such as stearic acid, oleic acid, erucic acid and 12-hydroxy stearic acid; metal salts of fatty acid such as zinc stearate, lead stearate, aluminum stearate, calcium stearate and magnesium stearate; fatty acid amides such as stearic acid amide, oleic acid amide, erucic acid amide, methylenebis stearic acid amide and ethylenebis stearic acid amide; fatty acid esters such as stearic acid monoglyceride, stearyl stearate and hardened oil; and higher alcohols such as stearyl alcohol. Among these, the fluidity-imparting agent is preferably a fatty acid, more preferably a stearic acid, since these compounds are less prone to affect the properties of the negative electrode material; easy to handle because of being solid at ordinary temperature; uniformly dispersible by melting at a temperature in process (a); evaporative during a process of graphitization; and obtainable at an affordable price.

When the mixture includes a fluidity-imparting agent, the amount thereof is not particularly limited. For example, the amount of the fluidity-imparting agent with respect to the total mixture may be from 0.1% by mass to 20% by mass, from 0.5% by mass to 10% by mass, or from 0.5% by mass to 5% by mass.

From the viewpoint of promoting graphitization of the graphitizable aggregate or the graphitizable binder, the mixture preferably includes a graphitization catalyst. The graphitization catalyst is not particularly limited, and examples thereof include a substance having a catalytic activity for graphitization, such as silicon, iron, nickel and titanium, and carbides, oxides and nitrides of these substances.

When the mixture includes a graphitization catalyst, the amount thereof is not particularly limited. For example, the amount of the graphitization catalyst with respect to the total mixture may be from 0.1% by mass to 50% by mass, from 0.5% by mass to 40% by mass, or from 0.5% by mass to 30% by mass.

In process (b), a molded product is obtained by molding the mixture in which the graphitizable binder is in a softened state. The molding of the mixture is performed for the purpose of increasing the amount of the mixture to be packed into a graphitization furnace or improving the effect of the graphitization catalyst.

The state of the graphitizable binder being softened may be, for example, a state in which the temperature of the mixture is not less than a temperature at which the graphitizable binder becomes softened. The state of the graphitizable binder being softened is not particularly limited as long at the mixture can be formed into a desired shape. In an embodiment, the molding of the mixture may be performed at a temperature of the mixture of 80°C or more, or 100°C or more. From the viewpoint of suppressing evaporation of evaporative components in the mixture, the molding of the mixture may be performed at a temperature of the mixture of 200°C or less, or 120°C or less.

In the mixture to be molded at process (b), the graphitizable binder may remain in a state of being softened from process (a), or may be softened by heating or the like, but not pulverized, after being cooled between process (a) and process (b).

In process (b), the method for molding the mixture is not particularly limited, and examples thereof include pressing molding in which the mixture is placed in a container and pressurized in a uniaxial direction; a vibration molding in which the mixture is placed in a container, a weight is placed thereon, and vibration or impact is applied to a metal flame; and extrusion molding in which the mixture is extruded from a nozzle or the like by lateral pressing. From the viewpoint of improving the productivity, extrusion molding is preferred.

The molded product obtained in process (b) is preferably subjected to a thermal treatment prior to being graphitized in process (c). By performing a thermal treatment, organic components that do not contribute to graphitization are removed, and generation of a gas during the graphitization tends to be suppressed.

The temperature for the thermal treatment is not particularly limited, and is preferably lower than a temperature for a thermal treatment performed in process (c). For example, the thermal treatment may be performed in a range of from 500°C to 1000°C.

In process (c), the molded product obtained in process (b) is graphitized. The method for graphitizing the molded product is not particularly limited, as long as the graphitizable components in the mixture can be graphitized. For example, the molded product may be graphitized by performing a thermal treatment in an atmosphere that makes the mixture resistant to oxidization. The atmosphere that makes the mixture resistant to oxidization is not particularly limited, and examples thereof include an inactive atmosphere such as nitrogen or argon, a vacuum and the like.

The temperature for the thermal treatment for the graphitization may be 1500°C or more, 2000°C or more, 2500°C or more, or 2800°C or more. The upper limit of the temperature for the thermal treatment is not particularly limited, and may be 3200°C or less, for example. When the temperature for the thermal treatment is 1500°C or more, changes in crystal tend to occur and graphitization tends to be promoted. When the temperature for the thermal treatment is 2000°C or more, crystals of graphite tends to grow in a more favorable manner. In addition, when a graphitization catalyst is used, the amount of ash derived from the remaining graphitization catalyst tends to be suppressed. When the temperature for the thermal treatment is 3200°C or less, sublimation of a part of the graphite tends to be suppressed.

In process (d), a pulverized product is obtained by pulverizing the graphitized product obtained in process (c). The method of pulverization is not particularly limited, and may be performed by a known method using a jet mill, a vibration mill, a pin mill, a hammer mill or the like. It is possible to adjust the particle size of the pulverized product. The method for adjusting the particle size is not particularly limited, and may be performed by a method using a device for pulverization, a method of using a sieve, or the like.

As necessary, the pulverized product obtained in process (d) may be subjected to (e) a process of disposing low-crystallinity carbon on at least a part of a surface of the pulverized product; or (f) a process of mixing the pulverized product with a different negative electrode active material.

Examples of the method for disposing low-crystallinity carbon on at least a part of a surface of the pulverized product, in process (e), include a method of mixing the pulverized product with a substance that is capable of becoming low crystallinity carbon upon thermal treatment (such as a resin), and subjecting the mixture to a thermal treatment. When low-crystallinity carbon is disposed on at least a part of a surface of the pulverized product, input/output properties, such as rapid charge/discharge properties of a lithium-ion secondary battery tends to improve.

The method for mixing the pulverized product with a different negative electrode active material, in process (f), is not particularly limited. By mixing the pulverized product with a different negative electrode active material, it may be possible to improve the desired properties of a lithium-ion secondary battery, as compared with a case in which only the pulverized product is used as a negative electrode active material. Examples of the negative electrode active material other than the pulverized product include particles of natural graphite, artificial graphite or the like, and particles including an element that is capable of storage/discharge of lithium ions such as Si, Sn, Ge and In.

The pulverized product obtained in process (f) may include a particle in which plural flat graphite particles are aggregated or bonded such that principal surfaces of the graphite particles are not parallel to each other (hereinafter, also referred to as a graphite secondary particle).

When the pulverized product is in a state of graphite secondary particles, a phenomenon in which particles are oriented along a direction of a current collector as a result of pressing the negative electrode for increasing the density thereof is suppressed, and a sufficient amount of paths for lithium ions to enter or leave the negative electrode tends to be secured.

Further, it is possible to reduce an effect on each particle applied by the pressing by creating spaces among the plural flat graphite particles in the graphite secondary particle. As a result, occurrence of breakage or cracking of the graphite particles tends to be suppressed.

In the disclosure, the flat graphite particle refers to a non-spherical graphite particle having an anisotropic shape. Examples of the flat graphite particle include a particle having a scaly shape, a flaky shape, a partially massive shape, and the like.

The flat graphite particle preferably has an aspect ratio represented by A/B, in which A refers to the length of the long axis and B refers to the length of the short axis, of from 1.2 to 20, more preferably from 1.3 to 10. When the aspect ratio is 1.2 or more, the contact area among the particles is increased and conductivity tends to be improved. When the aspect ratio is 20 or less, input/output properties such as rapid charge/discharge properties of a lithium-ion secondary battery tends to improve.

The aspect ratio is obtained by observing the graphite particles and measuring the A/B of randomly selected 100 particles, and calculating the arithmetic average value of the measured values of the 100 particles.

In the measurement, the length of the long axis A of a graphite particle is determined as a distance between a pair of parallel external tangent lines a1 and a2, which are most remote from each other among the parallel external tangent lines, of the projection image of the graphite particle. The length of the short axis B is determined as a distance between a pair of parallel external tangent lines b1 and b2, which are closest to each other among the parallel external tangent lines, of the projection image of the graphite particle.

In the disclosure, the term "principal surfaces of the graphite particles are not parallel to each other" refers to a state in which surfaces with the largest section of plural flat graphite particles (principal surfaces) are not oriented in a certain direction. Whether or not the principal surfaces of the graphite particles are not parallel to each other can be determined with a microscope.

When the plural flat graphite particles are aggregated or bonded such that principal surfaces of the graphite particles are not parallel to each other, it is possible to suppress an increase in a degree of orientation of principal surfaces of the flat graphite particles in the negative electrode, and to suppress expansion of the negative electrode upon charging. As a result, the cycle characteristic of a lithium-ion secondary battery tends to improve.

The graphite secondary particle may partially include a structure in which the plural flat graphite particles are aggregated or bonded such that principal surfaces of the graphite particles are parallel to each other.

In the disclosure, the state in which the plural flat graphite particles are "aggregated or bonded" refers to a state in which at least two flat graphite particles are aggregated or bonded. The term "bonded" refers to a state in which particles are chemically bonded directly or via a carbonaceous substance. The term "aggregated" refers to a state in which particles maintain an aggregated state due to the particle shape or the like, without the aid of chemical bonding. The flat graphite particles may be aggregated or bonded via a carbonaceous substance. Examples of the carbonaceous substance include a graphitized product of the graphitizable binder. From the viewpoint of mechanical strength, a state in which two or more flat graphite particles are bonded via a carbonaceous substance is preferred. Whether or not the flat graphite particles are aggregated or bonded can be determined by observing with a scanning electron microscope, for example.

From the viewpoint of easiness of aggregating or bonding, the average particle diameter of the flat graphite particle is preferably from 1 $\mu$m to 50 $\mu$m, more preferably from 1 $\mu$m to 25 $\mu$m, further preferably from 1 $\mu$m to 15 $\mu$m, for example. Examples of the method for measuring the average particle diameter of the flat graphite particle include a method of measuring with a scanning electron microscope.

The flat graphite particles and the material thereof are not particularly limited, and examples thereof include artificial graphite, vein natural graphite, flake natural graphite, coke, resin, tar and pitch. Among these, particles of artificial graphite, natural graphite and graphite obtained from coke, which are highly crystalline and soft, are advantageous in terms of increasing the density of the negative electrode.

The negative electrode may include spherical graphite particles. In that case, since the spherical graphite particles are high in density per se, it tends to become possible to reduce a pressure that is required for pressing the negative electrode to obtain a desired density.

Examples of the spherical graphite particles include spherical artificial graphite and spherical natural graphite. From the viewpoint of increasing the density of the negative electrode, the spherical graphite particles preferably have a high degree of density. Specifically, the spherical graphite particles are preferably spherical natural graphite that is obtained by a spheronization process such that the tap density can be increased. Further, a negative electrode layer including spherical natural graphite tends to exhibit an excellent peeling strength and is resistant to removal from a current collector, even if it is strongly pressed.

When the negative electrode includes spherical graphite particles, the negative electrode may include graphite secondary particles as mentioned above and spherical graphite particles. When the negative electrode includes graphite secondary particles and spherical graphite particles, the ratio thereof is not particularly limited and may be adjusted according to a desired electrode density, pressure conditions for pressing, desired battery properties, and the like.

Examples of a state in which the negative electrode includes graphite secondary particles and spherical graphite particles include a state in which graphite secondary particles and spherical graphite particles are mixed, and a state in which graphite secondary particles and spherical graphite particles are bonded to each other (hereinafter, also referred to as composite particles). Examples of the composite particles include particles in which graphite secondary particles and spherical graphite particles are bonded via a carbonized organic substance.

The composite particles may be produced by using, as a mixture obtained in process (a), a mixture including flat graphite particles or a raw material thereof and spherical graphite particles.

The average particle diameter of the negative electrode material produced by the method as mentioned above is not particularly limited. For example, the average particle diameter is preferably from 5 μm to 40 μm, more preferably from 10 μm to 30 μm, further preferably from 10 μm to 25 μm. The average particle diameter may be measured with a scanning electron microscope, in a similar manner to the flat graphite particles, or may be a volume average particle diameter measured by laser diffraction/scattering method.

In a case in which an electrode (negative electrode) is produced using the negative electrode material, examples of the method for measuring the average particle diameter of the negative electrode material include a method of observing, with a scanning electron microscope (for example, VE-7800, Keyence Corporation), a section of a sample electrode that is embedded in epoxy resin and subjected to mirror polishing. In that case, the average particle diameter is determined as a median value of the measured values of randomly selected 100 particles at the section of the sample electrode.

The sample electrode may be prepared by, for example, preparing a dispersion by adding water to a mixture of 98 parts by mass of the negative electrode material, 1 part by mass of styrene-butadiene resin as a binder and 1 part by mass of carboxymethyl cellulose as a thickener; forming a layer having a thickness of approximately 70 μm (before drying) by applying the dispersion onto a copper foil with a thickness of 10 μm; and drying the same at 105°C for 1 hour.

(Orientation)

The negative electrode material may have an orientation of a negative electrode, obtained from the negative electrode material, of not greater than 700, or not greater than 500. When the preparation of the negative electrode includes a pressing process, the orientation of the negative electrode is measured after being pressed.

The orientation of the negative electrode material is an index that indicates a degree of orientation of particles included in the negative electrode. When the negative electrode material has a small orientation, it indicates that the particles of the negative electrode material are oriented in random directions in the negative electrode, i.e., alignment of the particles along a direction of a current collector caused by pressing is suppressed.

In the disclosure, the orientation of the negative electrode material is calculated by measuring a surface of a sample electrode with an X-ray diffraction analyzer using a CuKα ray as the X-ray source. Specifically, the orientation is calculated by the following Formula (1), wherein the diffraction peak at carbon (002) is detected at a diffraction angle 2θ = 26°-27° and the diffraction peak at carbon (110) is detected at a diffraction angle 2θ = 70°-80°

Formula (1): intensity of diffraction peak at carbon (002) / intensity of diffraction peak at carbon (100)

<Method for manufacturing lithium-ion secondary battery>

A first embodiment of the method for manufacturing a lithium-ion secondary battery of the disclosure includes a process of manufacturing a negative electrode using a negative electrode material that is manufactured by the method of manufacturing a negative electrode as mentioned above.

A second embodiment of the method for manufacturing a lithium-ion secondary battery of the disclosure includes a process of manufacturing a negative electrode material by the method of manufacturing a negative electrode as mentioned above, and a process of manufacturing a negative electrode using the negative electrode material for a lithium-ion secondary battery.

The method of preparing a negative electrode using a negative electrode material is not particularly limited, and examples thereof include a method including forming a layer of negative electrode material on a current collector using a composition including a negative electrode material, a binder and a solvent, and optionally performing a thermal treatment or a pressing treatment.

The binder included in the composition is not particularly limited, and examples thereof include polymer compounds such as styrene-butadiene rubber, polymer compounds obtained by polymerization of ethylenically unsaturated carboxylic acid ester (such as methyl(meth)acrylate, ethyl(meth)acrylate, butyl(meth)acrylate and hydroxyethyl(meth)acrylate), polymer compounds obtained by polymerization of ethylenically unsaturated carboxylic acid (such as acrylic acid, methacrylic acid, itaconic acid, fumaric acid and maleic acid), polyvinylidene difluoride, poly(ethylene oxide), polyepichlorohydrin, polyphosphazene, polyacrylonitrile, polyimide and polyamide-imide. In the disclosure, the (meth)acrylate refers to either one or both of methacrylate and acrylate.

The solvent included in the composition is not particularly limited, and examples thereof include organic solvents such as N-methylpyrrolidone, dimethylacetamide, dimethylformamide and γ-butyrolactone, and water.

The composition may include a thickener for adjusting the viscosity of the composition. Examples of the thickener include carboxymethyl cellulose, methyl cellulose, hydroxymethyl cellulose, ethyl cellulose, polyvinyl alcohol, polyacrylic acid and a salt thereof, oxidized starch, phosphorylated starch, and casein.

The composition may include a conduction aid, as necessary. Examples of the conduction aid include carbon black, graphite, acethylene black, electroconductive oxides, and electroconductive nitrides.

The material and the shape of the current collector used for the preparation of the negative electrode are not particularly limited, and examples thereof include a ribbon-shaped foil, a ribbon-shaped punched foil, or a ribbon-shaped mesh formed from a metal or an alloy such as aluminum, copper, nickel, titanium and stainless steel. It is also possible to use a porous material such as porous metal (foamed metal) and carbon paper.

The method for forming a negative electrode material layer on a current collector using a composition is not particularly limited, and may be performed by a known method such as metal mask printing, electrostatic coating, dip coating, spray coating, roll coating, doctor blade coating, gravure coating, and screen printing. Integration of a negative electrode material layer with a current collector may be performed by a known process such as rolling, pressing and a combination thereof.

After forming a negative electrode material layer on a current collector, a thermal treatment (drying) may be performed. By performing a thermal treatment, it is possible to remove a solvent included in the negative electrode material layer, promote strengthening by curing of the binder, or improve the adhesion between the particles or between the particles and the current collector. In order to prevent the current collector from being oxidized, the thermal treatment may be performed in an inactive atmosphere such as helium, argon or nitrogen, or in a vacuum.

After forming a negative electrode material layer on a current collector, a pressing treatment may be performed. By performing a pressing treatment, it is possible to adjust the density of the negative electrode. The density of the negative electrode is not particularly limited, and may be from 1.5 $g/cm^3$ to 1.9 $g/cm^3$ or from 1.6 $g/cm^3$ to 1.8 $g/cm^3$. By increasing the density, it is possible to improve the volume capacity of the negative electrode, the adhesion of the negative electrode layer to the current collector, or the cycle characteristic of the battery. The pressing treatment is preferably performed prior to a thermal treatment.

The lithium-ion secondary battery produced by the method as mentioned above may include a negative electrode prepared by the method as mentioned above, a positive electrode, and an electrolyte. For example, a lithium-ion secondary battery has a configuration in which a negative electrode and a positive electrode are disposed to face each other via a separator, and an electrolyte is injected therein.

The positive electrode may be prepared by forming a positive electrode layer on a current collector. Examples of the current collector include a ribbon-shaped foil, a ribbon-shaped punched foil, or a ribbon-shaped mesh formed from a metal or an alloy such as aluminum, titanium and stainless steel.

The positive electrode material included in the positive electrode layer is not particularly limited, and examples thereof include a metallic compound, a metallic oxide, a metallic sulfide, and an electroconductive polymer. It is also possible to use lithium cobalt oxide ($LiCoO_2$), lithium nickel oxide ($LiNiO_2$), lithium manganese oxide ($LiMnO_2$), a multiple oxide thereof ($LiCo_xNi_yMn_zO_2$, x+y+z=1, 0<x, 0<y; $LiNi_{2-x}Mn_xO_4$, 0<x≦2), lithium-manganese spinel ($LiMn_2O_4$), lithium-vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine-type $LiMPO_4$(M:Co, Ni, Mn, Fe), electroconductive polymer such as polyacethylene, polyaniline, polypyrrole, polythiophene and polyacene, and porous carbon. These materials may be used alone or in combination of plural kinds. Among these, lithium nickel oxide ($LiNiO_2$) and a multiple oxide thereof ($LiCo_xNi_yMn_zO_2$, x+y+z=1, 0<x, 0<y; $LiNi_{2-x}Mn_xO_4$, 0<x ≦ 2) have a high degree of capacity and are suitably used as the positive electrode material.

Examples of the separator include nonwoven fabric, cloth, microporous film or a combination thereof, including polyolefin such as polyethylene and polypropylene as a major component. When the lithium-ion secondary battery has a configuration in which the positive electrode and the negative electrode are not in contact with each other, it is not necessary to use a separator.

As an electrolyte, it is possible to use an organic electrolyte solution, in which a lithium salt such as $LiClO_4$, $LiPF_6$, $LiAsF_6$, $LiBF_4$ or $LiSO_3CF$ is dissolved in a non-aqueous solvent such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, $\gamma$-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyltetrahydrofuran, 1,3-dioxolane, methyl acetate or ethyl acetate, alone or in combination of plural kinds.

Among these, an electrolyte including fluoroethylene carbonate tends to achieve a significant improvement in cycle characteristic by forming a stable SEI (solid electrolyte interface) on a surface of the negative electrode, and is suitably used.

The configuration of the lithium-ion secondary battery is not particularly limited, and examples thereof include a paper-shaped battery, a button-shaped battery, a coin-shaped battery, a laminate-type battery, a cylindrical battery and a rectangular battery. It is also possible to apply the negative electrode material to electrochemical devices other than lithium-ion batteries, employing intercalation/extraction of lithium ions for a charge/discharge system, such as a hybrid capacitor.

[Examples]

In the following, the embodiments as described above are explained more specifically based on the Examples. However, the embodiments are not limited to the Examples.

(1) Preparation of negative electrode material

The materials shown in Table 1 were mixed at the amounts shown in Table 1 (parts by mass), thereby obtaining a mixture. Then, a molded product was obtained by molding the mixture at a temperature shown in Table 1 by extrusion molding. Subsequently, the molded product was subjected to a thermal treatment at 800°C to 850°C for 8 hours in a nitrogen atmosphere, and subjected to graphitization at 2600°C to 2900°C for 30 hours. The graphitized product was pulverized, thereby obtaining graphite powders (negative electrode materials) of Example 1 to 15.

The negative electrode materials of Example 16 and Example 17 were obtained by forming a molded product by molding and vibration molding, with the temperature of the mixture shown in Table 1, and performing graphitization and pulverization under the conditions as described above.

The negative electrode materials of Reference Examples 1 to 3 were obtained by cooling the mixture and pulverizing the same to have a particle size of 25 $\mu$m, obtaining a molded product by packing the pulverized product into a rectangular container, and performing graphitization and pulverization under the conditions as described above.

The details of the materials shown in Table 1 are as follows.

Aggregate 1: mosaic coke having average particle size of 20 $\mu$m
Aggregate 2: mosaic coke having average particle size of 100 $\mu$m
Aggregate 3: semi-needle coke having average particle size of 20 $\mu$m
Graphite 1: spherical natural graphite having average particle size of 23 $\mu$m
Graphite 2: spherical natural graphite having average particle size of 14 $\mu$m
Graphitization catalyst: silicon carbide (SiC)
Binder: tar pitch
Fluidity-imparting agent: stearic acid

The density of the molded product (g/cm$^3$), the density of the graphitized product (g/cm$^3$), and the average particle diameter ($\mu$m), specific surface area (m$^2$/g) and saturated tap density (g/cm$^3$) of the negative electrode material are shown in Table 1, respectively.

The pulverized product obtained in each of the Examples and the Reference Examples included secondary particles in which graphite particles (graphitized product of the aggregate), were aggregated or bonded such that principal surfaces thereof were not parallel to each other. When spherical natural graphite was used as the material, the pulverized product also included composite particles in which the secondary particles and the spherical natural graphite were bonded to each other.

(2) Preparation of negative electrode and evaluation of orientation

A composition was prepared by mixing 98 parts by mass of the negative electrode material, 1 part by mass of styrene-butadiene rubber (BM-400B, Zeon Corporation) and 1 part by mass of carboxymethyl cellulose (CMC1380, Daicel Corporation), and adding water to adjust the viscosity. The composition was applied onto a current collector (copper foil of 10 $\mu$m in thickness) in an amount of 10 mg/cm$^2$ to form a composition layer. The composition layer was dried at 105°C for 1 hour in the atmosphere, and pressurized so as to have a density of 1.70 g/cm$^3$, thereby obtaining a negative electrode. The orientation of the negative electrode was evaluated by the method as mentioned above.

(3) Preparation of cell for evaluation

The negative electrode was cut into a round shape with 1.54 cm$^2$, and a coin-shaped cell (2016-type) for evaluation was prepared using the negative electrode, metallic lithium as a positive electrode, a mixture of ethylene carbonate/ethylmethyl carbonate (3/7 in volume) including 1.0M LiPF$_6$ and vinylene carbonate (0.5% by mass) as an electrolyte, a polyethylene microporous film of 25 $\mu$m in thickness as a separator, and a copper foil of 230 $\mu$m in thickness as a spacer.

(4) Evaluation of battery properties

The initial discharge capacity (Ah/kg) and the initial charge/discharge efficiency (%) were measured. Specifically, the cell for evaluation was placed in a thermostat chamber at 25°C, and subjected to constant-current charging at 0.434 mA until 0V. Then, the cell was further charged at a current voltage of 0V until the current attenuates to 0.043 mA, and the initial charge capacity was measured. After the charging and pausing for 30 minutes, the cell was discharged at 0.434 mA until 1.5V, and the initial discharge capacity was measured. The capacity was converted to a value per mass of the negative electrode material. The initial charge/discharge efficiency (%) was calculated by the following formula. The results are shown in Table 1.

$$\text{Initial charge/discharge efficiency (\%)} = \text{initial discharge capacity / initial charge capacity} \times 100$$

Table 1-(1)

| | Examples | | | | | | | | | |
|---|---|---|---|---|---|---|---|---|---|---|
| | 1 | 2 | 3 | 4 | 5 | 6 | 7 | 8 | 9 | 10 |
| Aggregate 1 (part by mass) | 49 | 39 | 35 | 32 | 50 | 26 | 40 | 33 | 37 | 34 |
| Aggregate 2 (part by mass) | - | - | - | - | - | - | - | - | - | - |
| Aggregate 3 (part by mass) | - | - | - | - | - | - | - | - | - | - |
| Graphite 1 (part by mass) | 22 | 17 | 18 | 14 | - | 27 | 18 | 18 | 15 | 18 |
| Graphite 2 (part by mass) | - | - | - | - | - | - | - | - | - | - |
| Graphitization catalyst (part by mass) | - | 15 | 18 | 25 | 21 | 18 | 16 | 17 | 15 | 17 |
| Binder (part by mass) | 27 | 27 | 27 | 27 | 27 | 27 | 24 | 30 | 33 | 27 |
| Fluidity-imparting agent (part by mass) | 2 | 2 | 2 | 2 | 2 | 2 | 2 | 2 | 0 | 4 |
| Temperature at molding (°C) | 100 | 100 | 100 | 100 | 100 | 100 | 100 | 100 | 100 | 100 |
| Density of molded product (g/cm³) | 1.65 | 1.75 | 1.75 | 1.82 | 1.76 | 1.74 | 1.66 | 1.75 | 1.74 | 1.74 |
| Density of graphitized product (g/cm³) | 1.42 | 1.31 | 1.32 | 1.23 | 1.33 | 1.30 | 1.31 | 1.34 | 1.41 | 1.32 |
| Average particle diameter (μm) | 23.3 | 23.1 | 23.1 | 24.0 | 23.0 | 23.3 | 23.0 | 23.3 | 23.8 | 23.2 |
| Specific surface area (m²/g) | 4.3 | 3.8 | 3.6 | 3.4 | 4.0 | 3.5 | 4.2 | 3.8 | 4.2 | 3.5 |
| Saturated tap density (g/cm³) | 0.86 | 0.88 | 0.87 | 0.88 | 0.82 | 0.88 | 0.86 | 0.87 | 0.88 | 0.86 |
| Orientation | 235 | 316 | 348 | 378 | 304 | 380 | 318 | 383 | 379 | 363 |
| Initial discharge capacity (Ah/kg) | 357 | 362 | 362 | 364 | 359 | 365 | 365 | 360 | 359 | 362 |
| Initial charge/discharge efficiency (%) | 93.1 | 93.9 | 94.2 | 94.6 | 93.3 | 94.4 | 93.8 | 94.1 | 93.5 | 94.3 |

Table 1-(2)

| | Examples | | | | | | | Reference Examples | | |
|---|---|---|---|---|---|---|---|---|---|---|
| | 11 | 12 | 13 | 14 | 15 | 16 | 17 | 1 | 2 | 3 |
| Aggregate 1 (part by mass) | - | - | 37 | 35 | 35 | 39 | 40 | 43 | - | - |
| Aggregate 2 (part by mass) | 42 | - | - | - | - | - | - | - | - | 43 |
| Aggregate 3 (part by mass) | - | 35 | - | - | - | - | - | - | 43 | - |
| Graphite 1 (part by mass) | 18 | 18 | - | 18 | 18 | 17 | 18 | 20 | 20 | 20 |
| Graphite 2 (part by mass) | - | - | 17 | - | - | - | - | - | - | - |

(continued)

| | Examples | | | | | | | Reference Examples | | |
|---|---|---|---|---|---|---|---|---|---|---|
| | 11 | 12 | 13 | 14 | 15 | 16 | 17 | 1 | 2 | 3 |
| Graphitization catalyst (part by mass) | 16 | 18 | 13 | 18 | 18 | 18 | 19 | 18 | 18 | 18 |
| Binder (part by mass) | 24 | 27 | 31 | 27 | 27 | 24 | 21 | 19 | 19 | 19 |
| Fluidity-imparting agent (part by mass) | 0 | 2 | 2 | 2 | 2 | 2 | 2 | - | - | - |
| Temperature at molding (°C) | 100 | 100 | 100 | 150 | 200 | 100 | 100 | - | - | - |
| Density of molded product (g/cm$^3$) | 1.76 | 1.74 | 1.76 | 1.74 | 1.73 | 1.69 | 1.60 | 1.58 | 1.53 | 1.59 |
| Density of graphitized product (g/cm$^3$) | 1.42 | 1.30 | 1.31 | 1.31 | 1.31 | 1.32 | 1.27 | 1.32 | 1.26 | 1.34 |
| Average particle diameter ($\mu$m) | 23.4 | 23.6 | 23.5 | 23.2 | 23.7 | 23.0 | 23.0 | 23.2 | 23.4 | 23.0 |
| Specific surface area (m$^2$/g) | 4.6 | 3.1 | 4.1 | 3.5 | 3.6 | 3.4 | 3.3 | 3.5 | 3.1 | 4.5 |
| Saturated tap density (g/cm$^3$) | 0.89 | 0.88 | 0.83 | 0.88 | 0.89 | 0.91 | 0.91 | 0.87 | 0.90 | 0.89 |
| Orientation | 451 | 470 | 372 | 352 | 363 | 363 | 370 | 318 | 453 | 445 |
| Initial discharge capacity (Ah/kg ) | 355 | 366 | 362 | 361 | 362 | 364 | 365 | 364 | 362 | 356 |
| Initial charge/discharge efficiency (%) | 93.3 | 94.9 | 93.2 | 94.0 | 94.1 | 94.6 | 94.4 | 94.3 | 94.7 | 93.2 |

As shown in Table 1, the cells of the Examples, in which the negative electrode materials are prepared by the method according to the disclosure, exhibit favorable initial charge/discharge efficiency that are comparable to the initial charge/discharge efficiency of the cells of the Reference Examples, in which the negative electrode materials are prepared by the conventional method (i.e., pulverized prior to molding).

## Claims

1.  A method of manufacturing a negative electrode for a lithium-ion secondary battery, the method comprising:

    (a) a process of obtaining a mixture that comprises a graphitizable binder and at least one selected from the group consisting of a graphitizable aggregate and graphite;
    (b) a process of obtaining a molded product by molding the mixture, in which the graphitizable binder is in a softened state;
    (c) a process of obtaining a graphitized product by graphitizing the molded product; and
    (d) a process of obtaining a pulverized product by pulverizing the graphitized product.

2.  The method of manufacturing a negative electrode for a lithium-ion secondary battery according to claim 1, wherein the process of obtaining a molded product is performed in a state in which the mixture has a temperature of 80°C or more.

3.  The method of manufacturing a negative electrode for a lithium-ion secondary battery according to claim 1 or claim 2, wherein the process of obtaining a molded product is performed by extrusion molding.

4.  The method of manufacturing a negative electrode for a lithium-ion secondary battery according to any one of claim 1 to claim 3, wherein the mixture further comprises a fluidity-imparting agent.

5.  The method of manufacturing a negative electrode for a lithium-ion secondary battery according to claim 4, wherein the fluidity-imparting agent comprises a fatty acid.

6.  The method of manufacturing a negative electrode for a lithium-ion secondary battery according to any one of claim 1 to claim 5, wherein the pulverized product comprises a particle in which plural flat graphite particles are aggregated or bonded such that principal surfaces of the graphite particles are not parallel to each other.

7.  A method of manufacturing a lithium-ion secondary battery, the method comprising a process of manufacturing a negative electrode using a negative electrode material that is manufactured by the method of manufacturing a negative electrode for a lithium-ion secondary battery according to any one of claim 1 to claim 6.

8. A method of manufacturing a lithium-ion secondary battery, the method comprising: a process of manufacturing a negative electrode material for a lithium-ion secondary battery by the method of manufacturing a negative electrode for a lithium-ion secondary battery according to any one of claim 1 to claim 6; and a process of manufacturing a negative electrode using the negative electrode material for a lithium-ion secondary battery.

## INTERNATIONAL SEARCH REPORT

International application No.

PCT/JP2018/012985

### A. CLASSIFICATION OF SUBJECT MATTER
Int.Cl. H01M4/587(2010.01)i, H01M4/36(2006.01)i

According to International Patent Classification (IPC) or to both national classification and IPC

### B. FIELDS SEARCHED

Minimum documentation searched (classification system followed by classification symbols)
Int.Cl. H01M4/587, H01M4/36

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-179879 A (TOKAI CARBON KK) 12 July 2007, paragraphs [0020]-[0026], [0029], [0033]-[0037], [0042], table 1<br>& US 2010/0090173 A1, paragraphs [0023]-[0029], [0032], [0036]-[0040], [0046], table 1 & WO 2007/074655 A1 & EP 1968140 A1 & CN 101351908 A | 1-8<br>3-5 |
| X<br>Y | JP 2011-238622 A (MITSUBISHI CHEMICAL CORPORATION) 24 November 2011, paragraphs [0067], [0077], [0118]-[0122]<br>& US 2008/0199777 A1, paragraphs [0105], [0166]-[0170] & EP 1798790 A1 & CN 101053098 A | 1-3, 6-8<br>4-5 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 18.06.2018 | 03.07.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## INTERNATIONAL SEARCH REPORT

International application No.

PCT/JP2018/012985

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2014-67637 A (MITSUBISHI CHEMICAL CORPORATION)<br>17 April 2014, paragraphs [0044], [0045], [0126]-<br>[0136]<br>(Family: none) | 1-2, 4, 6-8<br>4-5 |
| X<br>Y | JP 2012-133981 A (JFE CHEMICAL CORPORATION) 12<br>July 2012, paragraphs [0061]-[0063], [0114],<br>[0115]<br>& WO 2012/086826 A1 & CN 103283068 A | 1-2, 6-8<br>3-5 |
| X<br>Y | JP 2983003 B2 (NIPPON CARBON CO., LTD.) 29<br>November 1999, claim 1, paragraphs [0023], [0024],<br>[0032], [0033]<br>(Family: none) | 1-2, 6-8<br>4-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2015147012 A